# EUROPEAN PATENT APPLICATION

(11) **EP 2 607 953 A1**
(43) Date of publication of application: **26.06.2013**
(21) Application number: 11195618.1
(22) Date of filing: 23.12.2011
(51) Int. Cl.: G03B 11/00, G03B 17/14, G03B 17/18, H04M 1/02, G03B 17/56, G02B 7/14

(54) **Apparatus, and associated method, for affixing an external camera lens to a device having camera functionality**

(71) Applicant: Research In Motion Limited, Waterloo, ON N2L 3W8 (CA)
(72) Inventor: Lazaridis, Mihal, Waterloo, Ontario N2L 3W8 (CA); Dikun, Raymond Michael, Irving, TX 75039 (US); Brogle, Richard James, Waterloo, Ontario N2L 3W8 (CA)
(74) Representative: Bryn-Jacobsen, Caelia

(57) **Abstract**

An assembly for a device having camera functionality, such as a portable wireless device, provides for affixation of an external camera lens to the device. A magnetic coupler is positioned at the device. The magnetic coupler exerts magnetic forces that affix the external camera lens in position. Removal forces in excess of the magnetic forces are applied to remove the external lens out of the affixation at the device.

## Description

The present disclosure relates generally to a manner by which to utilize an external lens at a device, such as a multi-functional wireless device, having camera functionality. More particularly, the present disclosure relates to an apparatus, and an associated method, by which to provide for affixation of the external lens at the device. The external lens is releasably affixable to the device, even when the device is dimensionally constrained and only limited space is available to connect the external lens to the device.

### Background

Portable wireless devices are used by many through which to communicate. Cellular and other analogous radio communication systems, for instance, have been installed to encompass significant portions of the populated areas of the world and are accessed to carry out a communication service. Communication by way of a cellular or other analogous communication system is typically carried out through use of a portable wireless device. A portable wireless device is typically of small dimensions, permitting the wireless device to be hand-carried by a user and is available for use whenever needed.

While many portable wireless devices were first constructed primarily to provide voice communication services, additional functionalities are now regularly also implemented at a wireless device. A wireless device that includes additional functionality is sometimes referred to as a multi-functional device.

An exemplary multi-functional wireless device, for instance, includes camera functionality. The camera functionality is implemented, e.g., using a camera module that is housed within the housing of the wireless device. The camera functionality provides for the capture of an image or a video sequence formed of a series of images. Similar camera functionality could be provided by a standalone device, such as a standalone camera or video recorder.

When implemented within a portable wireless device, the camera module must also be of small dimensions so as not significantly to affect the dimensions of the device. This constraint imposed upon the camera module also constrains various operational capabilities and parameters of the camera module. For instance, the configuration and capability of a camera lens, used to focus the light energy of a target scene, is limited due to these dimensional constraints. The resultant recorded images are correspondingly constrained. Portable devices having camera functionality instead typically use an integral camera lens. Image signal processing of a recorded image provides for limited alteration of image characteristics but generally is unable to provide the range of images possible when using a variety of camera lenses having different lens characteristics.

Challenges remain to be addressed, therefore, with various aspects of dimensionally-constrained devices that include camera functionality.

It is in light of this background information related to devices having camera functionality that the significant improvements of the present disclosure have evolved.

### Brief Description of the Drawings

Figure 1 illustrates a functional block diagram of a wireless device at which an implementation of the present disclosure is embodied.

Figure 2 illustrates a functional block diagram of a portion of the device shown in Figure 1 of an implementation of the present disclosure.

Figure 3 illustrates a rear, elevational view of a portion of the wireless device shown in Figure 1.

Figure 4 illustrates a perspective view of a portion of the wireless device shown in Figure 3 together with an external camera lens positionable to be affixed to the wireless device.

Figure 5 illustrates a cross-sectional view of a portion of the external camera lens and the device shown in Figures 3 and 4.

Figure 6 illustrates a process diagram representative of a process performed during operation of an exemplary implementation of the present disclosure.

Figure 7 illustrates a method flow diagram representative of the method of operation of an implementation of the present disclosure.

### Detailed Description

The present disclosure provides an apparatus, and an associated method, by which to utilize an external lens at a device, such as a multi-functional wireless device, having camera functionality.

Through operation of an implementation of the present disclosure, a manner is provided by which to provide for affixation of an external lens at a device having camera functionality.

In one aspect of the present disclosure, a magnetic coupler is supported at the device having the camera functionality. The magnetic coupler provides an attractive, magnetic force that forms an affixation force to affix the external lens in position. The magnetic coupler is variously formed of a material of large, positive magnetic permeability that is attracted to a material of high magnetic flux strength or is itself a material of high magnetic flux strength. A user of the device selects an external camera lens, such as a lens that exhibits desired lens characteristics, that is to be used pursuant to image recordation at the device. The user positions the selected camera lens such that the attractive magnetic force exerted by the magnetic coupler affixes the selected camera lens in position at the device. When the selected camera lens is no longer to be utilized, the user applies a release force to the external camera lens to remove the camera lens out of the affixed engagement with the device.

In another aspect of the present disclosure, the device having the camera functionality includes an aperture defined at, and extending through, a face surface of a housing of the device having the camera functionality. The magnetic coupler is positioned at the device in proximity to the aperture, thereby to exert the affixation force to affix the external camera lens in an affixed position at the housing about the aperture at which the integrated camera lens is positioned. When the external camera lens is positioned about the aperture, the attractive, magnetic force is exerted by the magnetic coupler to cause the external camera lens to be affixed in position.

In another aspect of the present disclosure, the magnetic coupler is ringshaped and positioned about the aperture formed at the housing face. The ring formed of the magnetic coupler defines an inner diameter and an outer diameter. The inner and outer diameters are determinative of the width of the magnetic coupler. The width is, for instance, great enough to permit seating of a correspondingly-configured camera lens thereupon. In one alternate implementation, the magnetic coupler is formed of discrete coupler portions that are arranged in a ring-like configuration with the different, discrete coupler portions positioned at corresponding radial distances from a center point, such as a center of the aperture. In another implementation, the magnetic coupler is configured in another manner, such as formed of portions of another geometric shape.

In another aspect of the present disclosure, the magnetic coupler is supported at an inner face surface of a device housing at which the camera functionality is implemented. The magnetic coupler is thereby embedded behind the housing face surface and hidden from view at the exterior of the device housing.

Alternately, the magnetic coupler is formed to be coplanar with the outer face surface of the device having the camera functionality. When formed to be substantially coplanar with other face surface portions of the device housing, the aesthetic appearance of the outer face surface of the device is maintained.

In another aspect of the present disclosure, the magnetic coupler is formed on an outer face surface of the device having the camera functionality. In one implementation, a finishing material applied to the housing is also applied to the magnetic coupler to facilitate cosmetic blending-in of the magnetic coupler with the housing.

In another aspect of the present disclosure, the outer face surface includes a depression or indentation at the location of the magnetic coupler. The depression is of a configuration to facilitate alignment and seating of an external camera lens thereon.

In another aspect of the present disclosure, the external lens includes a seating surface to facilitate seating of the camera lens upon a surface of the device having the camera functionality. The seating surface is of a configuration to facilitate the seating engagement of the external camera lens upon the surface of the device. The seating surface is, e.g., flat or is configured to include a mating piece of a configuration to permit mated engagement with corresponding structure at the seating surface of the device housing.

In another aspect of the present disclosure, the external camera lens includes an anular seating surface that is of an inner diametrical dimension to permit positioning of the camera lens about the aperture extending through the face surface of the housing. The external camera lens, when seated at the face surface of the device and positioned about the aperture extending through the face surface of the device positions a lens refractor of the camera lens such that incident light on the lens refractor is refracted to the directed towards the aperture.

In another aspect of the present disclosure, the seating surface of the external camera lens is of a material that is attracted by the attractive, magnetic forces exerted by the magnetic coupler. The material comprises, for instance, a magnetic material that also provides an attractive, magnetic force. When the external camera lens is positioned in proximity to the camera-housing location at which the magnetic coupler is supported, the attractive forces exerted by the magnetic coupler facilitates positioning of the external camera lens at an appropriate position upon the face surface of the device such that light energy of a target incident upon the refractive material of the camera lens is directed towards the aperture formed in the housing.

Because the external camera lens is releasably engageable with the device, a camera lens exhibiting desired lens characteristics is selectable and usable during operation of the camera functionality to record images. When no longer needed, such as when the camera functionality is no longer utilized, or if a camera of different lens characteristics is preferred, the camera lens is easily removable from the device by applying a release force that is in excess of the attractive magnetic force. Use of a magnetic coupler obviates the need for use of threaded fasteners, which have greater dimensional requirements and are impractical for use in dimensionally-constrained devices, such as a portable wireless device having camera functionality. The magnetic coupler supported at the device provides an attractive magnetic force that forms an affixation force to affix the external lens in position. Use of any of various lenses having any of various lens characteristics are affixable to the device to provide for image recordation of images of any of various characteristics, dependent upon the characteristics of the lens affixed to the device when the image is recorded.

In another aspect of the present disclosure, a detector is further provided that detects positioning of the external camera lens at the device housing. In a further implementation, the detector further detects a characteristic of the external lens, such as the zoom factor, a refraction indication, or other lens indicia. The detector comprises, for example, an RFID (Radio Frequency Identification) device, an NFC (Near Field Communication) device or antenna, or other radio-frequency detector or a detector that detects electrical signals. The detected information is used to facilitate image signal processing operation.

In another aspect of the present disclosure, the external lens includes an information provider that provides information that is detectable by the detector when the external lens is positioned at the device housing. The information provider comprises, for instance, an RFID or NFC device, another type of RF (radio frequency) device, or provides the information made by way of an electrical connection when the external camera lens is positioned at the device housing.

In these and other aspects, therefore, an assembly, and an associated method, is provided for a device having camera functionality and a device housing and is configured to exert an attractive magnetic force that forms an external-lens-affixation force.

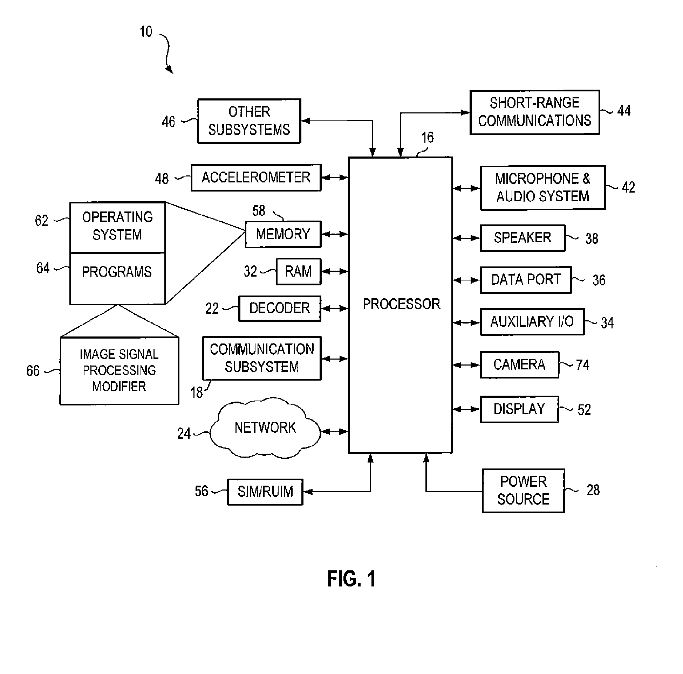

Turning first to Figure 1, an exemplary device 10 of an implementation of the present disclosure is shown. In the exemplary implementation, the device 10 forms a multi-functional, wireless device having camera functionality. While the following description shall describe operation with respect to the exemplary implementation in which the device 10 forms a wireless device, the device 10 is also representative of other devices, including stand-alone camera devices.

The device 10 includes a processor 16 that controls overall operation of the device 10. The processor controls, for instance, voice, data, and command communications, which are implemented by a communication subsystem 18. The communication subsystem 18 includes radio transceiver elements, such as radio receiver and radio transmitter elements. The communication subsystem 18 is used, amongst other things, to initiate and to support an active voice call or data communication session. The elements of the communication subsystem are comprised of any various combinations of hardware, software, and firmware to perform various designated functions. The software is functionally or conceptually divided into software modules. Software in one module is able to share or to call upon functions of another module.

When operated pursuant to a communication service, data received at the device 10 is processed by a decoder 22 that performs decompression and/or decrypting operations. The device 10 receives information from, and sends information to, a network 24. The communication system 18 facilitates initiation and operation of an active call when the wireless device is in a real-time, voice communication session. The network 24 is of any of various types of networks including, for example, a cellular network, a wireless data network, a wireless voice network, and a network that supports both voice and data communications. The network 24 uses any of a variety of formats, protocols, standards, such as the GSM (Global System for Mobile Communications), CDMA (Code Division Multiple Access), wireless Ethernet (Institute of Electrical and Electronic Engineers Standard 802.11), or any of various other standards or wireless networking protocols.

A power source 28 provides operative power to the elements of the device 10 to permit operation of the device. The power source 28 comprises batteries or other portable power supply or port to an external power supply.

The processor 16 also interacts with other elements of the device 10, including a random access memory (RAM) 32, an auxiliary input/output (I/O) subsystem 34, a data port 36, a speaker 38, a microphone and audio system 42, a short-range communication system 44, other subsystems 46, an accelerometer 48, and a display 52.

The processor further interacts with a subscriber identity module or removable user identity module (SIM/RUIM) 56. Identification information is alternately stored at an internal memory of the device, such as at the memory 58.

The device 10 further includes an operating system 62 and software programs 64 formed of program code. The operating system 62 and the software program 64 are executed by the processor 16 during operation of the device 10. The software program includes software modules, here including an image signal processing modifier module 66. The image signal processing module 66, when invoked, causes modification of image signal processing responsive to detected indication of the positioning of an external camera lens and/or of a characteristic of the external camera lens, as shall be described more fully below.

The device 10 further includes a camera module 74. The camera module 74 provides camera functionality to the device 10. The processor 16 further interacts with the camera module 74. The camera module 74 provides for the recordation of an image or of a video sequence, formed of a sequence of images. Image recordation is carried out through operation both of elements of the camera module 74 and operation of the processor 16 to invoke execution of selected program of the software program 64.

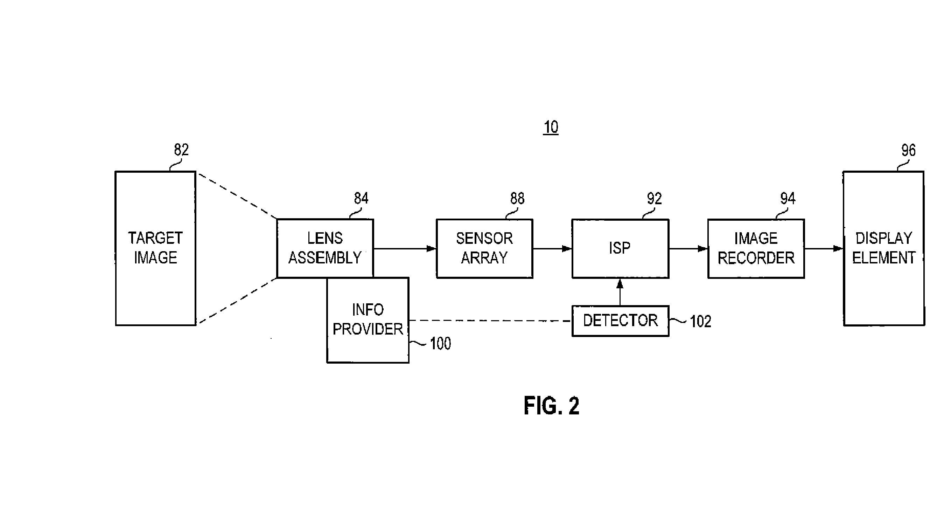

Figure 2 illustrates a representation of portions of the device 10 shown in Figure 1. The portions of the device 10 shown in Figure 2 provide for the camera functionality, which permits the recordation of an image and is representative, e.g., of the camera module 74 shown in Figure 1.

To record an image, here of a target 82, the device is oriented to position a lens assembly, directly or indirectly, in a line-of-sight orientation with the target. Through such orientation, the target is "sighted". When properly oriented, a user of the device 10 elects to capture the image of the target by causing entry of a command to capture the image. Responsive to entry of the command, actions are undertaken to capture the image.

Light energy of the target, incident at the lens assembly 84 is refracted, and the light energy is directed towards sensors of a sensor array 88. The individual sensor elements, referred to as pixels, of the array exhibit electrical characteristics dependent upon the characteristics of the light energy passed by the lens assembly and generate an electrical signal that is applied to an image signal processor (ISP) 92. The electrical signals applied to the ISP 92 are of values representative of the light energy of the target scene 82 that is passed by the lens assembly 84. The individual sensors or pixels of the sensor array 88 are, for example, positioned substantially at, or close to, the focal point of the lens or lenses of the lens assembly 84. The electrical signal formed responsive to the sensed light energy of the target scene are acted upon by the ISP 92 to form an image that is stored or cached at the image recorder 94. The recorded image may be displayed at the display element 96, depending on the operating mode of the device 10.

As mentioned previously, due to dimensional constraints typically imposed upon portable wireless devices, as well as other consumer electronic devices, the camera functionalities of such devices are correspondingly constrained. Such constraints place limitations on the lens assembly 84 and a camera lens or lenses thereof. Typically, an integral camera lens is utilized. The integral camera lens is typically of fixed characteristics or of characteristics of limited changeability. That is to say, the lens assembly forms a permanent portion of the camera module and camera functionality, and the images that can be recorded during operation of the camera functionality are limited to the images that can be obtained through use of the integral, lens assembly and altered by image processing techniques.

The lens assembly 84 of an implementation of the present disclosure, in contrast, includes an external camera lens that is affixable to the device 10. The external camera lens is removable out of affixation to the device 10, thereby to permit the external camera lens to be replaced with another camera lens. When a plurality of different camera lenses exhibiting different lens characteristics are available, a user of the device is able to select from amongst the available, external camera lenses. Through appropriate selection of the external camera lens, and affixation of the selected lens to the device, image recordation using a camera lens, which exhibits desired lens characteristics, is able to be made.

The device 10 shown in Figure 2 further includes an information provider module 100 and an information detector module 102. The information provider 100 is embodied at, or otherwise associated with, the lens assembly 84. The provider 100 provides information associated with the lens assembly, at least to indicate the positioning of the external camera lens in position at the device 10. In one implementation, the information provider further provides information related to the lens characteristic of the external camera lens. The information provider module 100 may be implemented, e.g., as an RF device, such as an RFID device, or NFC device, or is implemented to provide information by way of an electrical connection. The information detector module 102 detects or receives the provided information. Once detected or received, the information is provided to the ISP 92 by the detector module 102. The information is used thereat to modify processing to take into account the refraction provided by the external camera lens.

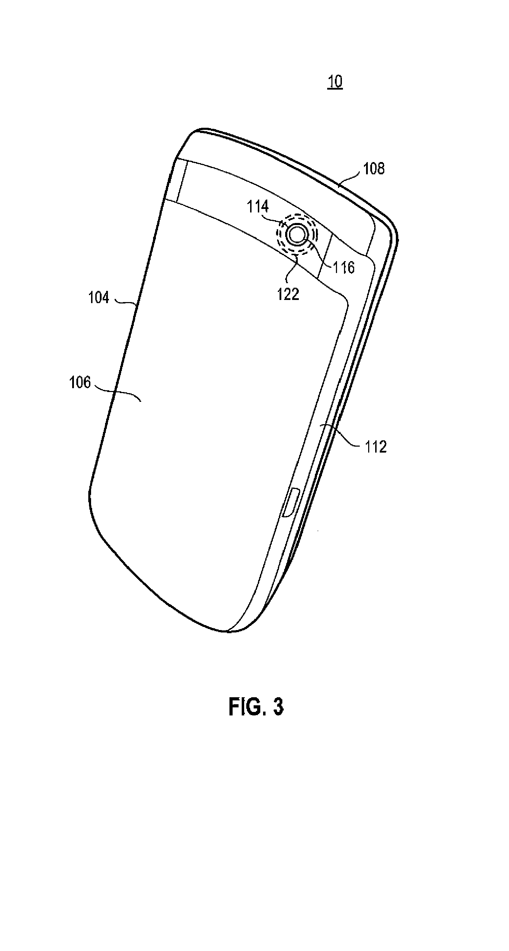

Figure 3 illustrates a representation of a device 10 of an implementation of the present disclosure. The device 10 includes a housing 104 that includes face surfaces, of which a back face surface 106 and top and side surfaces 108 and 112, respectively, are visible in Figure 3. In the illustrated implementation, an aperture 114 is formed to extend through the back face surface 106 of the device 10. In the exemplary implementation, an integral lens 116 is mounted in the aperture and is terminally positioned thereat.

A magnetic coupler 122, formed of a magnetic material, is positioned about the aperture 114. The magnetic coupler 122 surrounds the aperture 114, in a ring-like configuration. The annular configuration of the magnetic coupler 122, in implementation, may be formed of a substantially integral, magnetic piece. That is to say, in one implementation, the ring is a single material piece. In another implementation, the magnetic coupler 122 may be formed of discrete, magnetic pieces arranged, for example at common radial distances about a center or other point of the aperture 114. In an alternate implementation, the aperture 114 is formed of another geometric shape, and the magnetic coupler 122 may be analogously configured in another shape, if appropriate. The magnetic coupler 122 may be formed of any of various magnetic materials, including, for instance, molybdenum. In one implementation, the face surface 106 is also indented around the aperture 114.

The magnetic coupler 122 may be of a width defined by an inner diameter and outer diameter of the coupler 122. When the magnetic coupler 122 is formed of a material that exhibits a high magnet field strength, flux density, or positive magnetic permeability, that is, high 'magneticity', the magnetic coupler 122 need not be of significant width. When the magnetic coupler 122 is comprised of discrete pieces and the magneticity of the coupler is high, only a fractional portion of the aperture is may be formed of magnetic material. Greater amounts of magnetic material, or a material of greater magneticity, increases the magnetic forces, which form attractive forces, exhibited by the coupler 122.

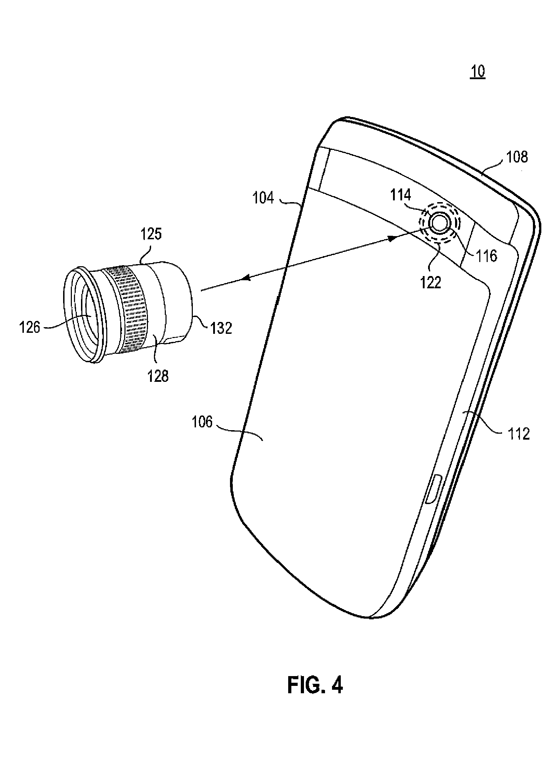

Figure 4 again illustrates a device 10 and again shows the housing 104 and face surfaces 106, 108, and 112. An external camera lens 125 is further shown in Figure 4. The external camera lens includes a lens 126 and a lens body or housing 128. The lens housing 128 supports the lens 126 at, or close to, an end side of the housing. The lens 126 is of any of many varied lens characteristics including, for instance, micro lenses, macro lenses, zoom lenses, and other specialty lenses. The lens housing 128 may be tubular in configuration and, in this example, has a generally annular cross-section and, here, is slightly tapered to be of a slightly conical configuration. An end side 132 of the lens housing 128 defines a seating surface for seating abutment of the camera lens 125 upon the back face surface 106 of the device 10. The seating surface formed of the end side 132 is formed of a material that is attracted to the magnetic, affixation forces of the magnetic coupler 122. In the exemplary implementation, the material of the seating surface is also, or includes, a magnetic material. When positioned in proximity to the magnetic coupler 122, the magnetic forces of the magnetic coupler 122 attract the seating surface of the external lens 125 to cause or facilitate the seating of the external camera lens 125 upon the back face surface 106 at the location where the magnetic coupler 122 is positioned. When the seating surface of the external camera lens 125 is also formed of a magnetic material, mutual attractive forces are provided.

In one implementation, the width of the magnetic coupler 122 substantially corresponds to the width of the seating surface of the external lens 125. In another implementation, the width of the magnetic coupler 122 is greater than the width of the seating surface. In another implementation, the width of the magnetic coupler 122 is less than the seating surface of the external camera lens 125. In one exemplary implementation, the outer and inner diameters of the seating surface of the external camera lens 125 are between the outer and inner diameters of the magnetic coupler 122. That is to say, the inner diameter of the seating surface is greater than the inner diameter of the magnetic coupler 122, and the outer diameter of the seating surface is greater than the outer diameter of the magnetic coupler 122. In this implementation, and others, the magnetic forces of the magnetic coupler 122 also guide the external camera lens 125 into a correct seating position upon the face surface of the device 10. When the face surface includes the indentation about the aperture, the aperture facilitates alignment of the external camera lens 125 at the housing.

The magnetic coupler 122 is, in one implementation, supported at an inner side of the back face surface 106. In another implementation, the magnetic coupler 122 is formed to be coplanar with the back face surface 106, and in another implementation, the magnetic coupler is mounted upon the back face surface 106. The magnetic coupler 122 is, in one example, coated with the same material that coats the device housing 104.

In one implementation, a plurality of different external camera lenses 125 is available, with different ones of the external camera lenses having different lens characteristics. A user of the device 10 selects from amongst the available, external camera lenses and positions the selected camera lens in proximity to the magnetic coupler. The magnetic forces exhibited by the magnetic coupler attract the seating surface of the camera lens and causes affixation of the camera lens in position at the back face surface of the device. When the seating surface of the external camera lens includes, or is formed of, a magnetic material, attractive forces provided by the magnetic material provide additional affixation forces to maintain the external camera lens in the affixed position. When so-positioned, the external camera lens is positioned to refract incident light energy, such as light associated with a target scene, through the aperture 114, thereby to permit the sensors of the sensor array 88 (shown in Figure 2) to sense the incident light energy thereon. An integral camera lens, positioned at the aperture further refracts the light energy, and the light incident on the sensor assembly is refracted by both the external camera lens and the integral camera lens. Construction of the external camera lens takes into account the characteristics of the integral characteristics so that the resultant lens combination is of desired characteristics.

The user of the device removes the external camera lens by applying a removal force that is in excess of the magnetic force exhibited by the magnetic coupler. If desired, a user then selects another external camera lens and positions the newly-selected camera lens in position to permit affixation of the camera lens at the back face of the device 10.

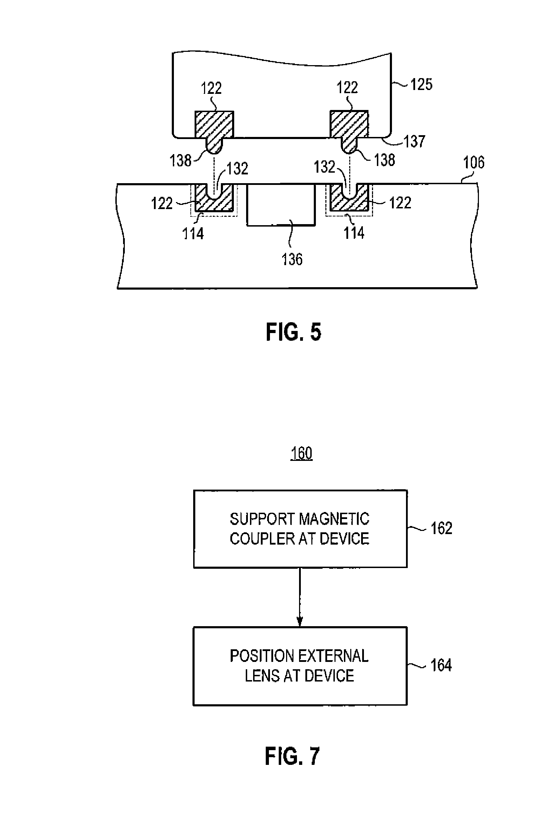

Figure 5 illustrates a cross-sectional view of a portion of the back face surface 106 of the device 10 and a portion of the external camera lens 125 of an exemplary implementation of the present disclosure. The magnetic coupler 122 that extends about the aperture at an interior area defined by the aperture 114 is also again shown. An integral camera lens 136 is here shown to be positioned at the aperture 114. In this implementation, an annular indentation 132 is formed at the face surface 106 of the device housing. In another implementation, no indentation is utilized, and self alignment is provided by the strength of magnetic attractive forces.

The seating surface formed of the end side 137 of the external camera lens 125 includes a corresponding mated, annular projection 138 on the external lens 125 conforming to the indentation 132. The indentation and projection pairs 132 and 138 facilitates self-alignment of the external camera lens when positioned in proximity to the magnetic coupler and the magnetic, attractive forces affix the external camera lens at the surface 106.

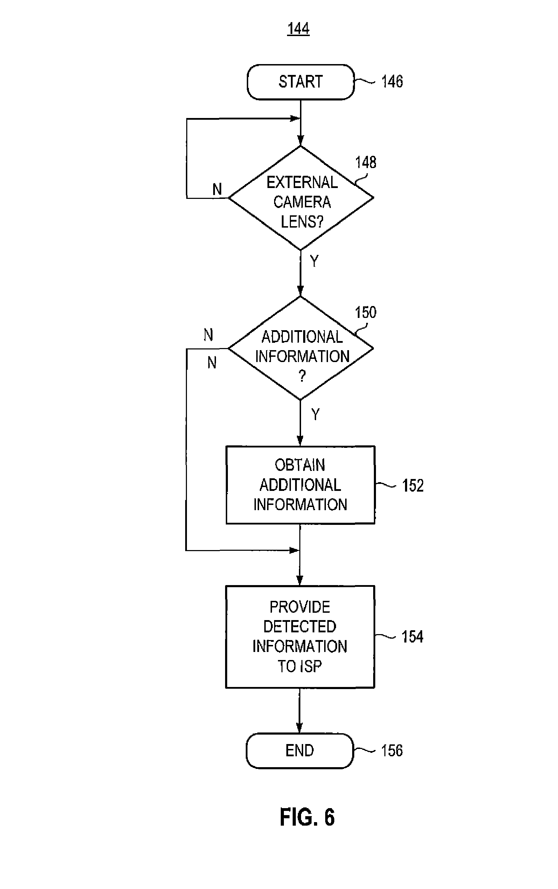

Figure 6 illustrates a process 144 of an implementation of the present disclosure to facilitate creation of an image of a target.

Subsequent to entry into the process, indicated by the start block 146, a determination is made at the decision block 148 as to whether the external camera lens is seated at the device. If not, the no branch is taken back to the decision block 148. If, conversely, a determination is made that the lens is seated at the device, the yes branch is taken to the decision block 150. At the decision block 150, a determination is made as to whether additional information about the external camera lens is provided. If so, the yes branch is taken to the block 152, and the additional information is obtained. Then, and as indicated by the block 154, the determined information is provided to the ISP of the device. A no branch is taken from the decision block 150 to the block 154. Thereby, information indicating that an external lens is seated at the device and, if available, additional information associated with the external camera lens is utilized by the ISP. A path is then taken to the end block 156. The process 144 is carried out, for instance, by execution of modules of the programs 64 by the processor 16, shown in Figure 1, or i.e., 64 through operation of the modules 100 and 102, shown in Figure 2.

Figure 7 illustrates a method flow diagram 160 representative of the method of operation of an implementation of the present disclosure. The method facilitates image focusing of a target scene at a device having a camera module.

First, and as indicated by the block 162, a magnetic coupler is supported at a device housing of the device. The magnetic coupler exerts an attractive magnetic force. Then, and as indicated by the block 164, an external lens is positioned at the device housing in proximity to the magnetic coupler. The attractive magnetic force affixes the external lens in position at the device housing.

Thereby, a camera lens of selected lens characteristics can be used at a dimensionally-constrained device having camera functionality. The external lens is releasably affixed to the device by magnetic forces exerted by a magnetic coupler. Surface affixation is thereby provided, obviating the need for other affixation mechanisms, such as threaded fasteners.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An assembly for a device having camera functionality, said assembly comprising:
a magnetic coupler supported at the device housing for exerting an attractive magnetic force on an external camera lens.

2. The assembly of claim 1 further comprising an external camera lens affixable to the device housing by the attractive magnetic force exerted by said magnetic coupler.

3. The assembly of any of claims 1 - 2 wherein said external camera lens comprises a metallic seating surface configured to seatingly engage said magnetic coupler at the device housing.

4. The assembly of claim 3 wherein the metallic seating surface of said external camera lens comprises an annular-shaped seating surface.

5. The assembly of claim 4 wherein said magnetic coupler comprises an annular ring of diametrical dimensions configured to correspond with dimensions of the annular-shaped seating surface of said external camera lens.

6. The assembly of any of claims 2 - 5 wherein said external camera lens further comprises an information provider configured to provide an indication of positioning of said external camera lens.

7. The assembly of any of claims 2 - 6 further comprising a detector module within said device configured to receive an indication of positioning of said external camera lens.

8. The assembly of any of claims 2 - 7 further comprising a detector module within said device configured to receive an indication of a characteristic of said external camera lens.

9. The assembly of any of claims 1- 8 wherein said magnetic coupler is configured to be coplanar with an outer surface of the device housing.

10. The assembly of any of claims 1 - 9 wherein said magnetic coupler is formed at an outer surface of the device housing.

11. The assembly of any of claims 1 - 10 wherein said magnetic coupler is formed at an inner surface of the device housing.

12. A method for facilitating image focusing of a target image at a device having a camera module, said method comprising:
supporting a magnetic coupler at a device housing of the device, the magnetic coupler exerting an attractive magnetic force; and
positioning an external lens at the device housing in proximity to the magnetic coupler, the attractive magnetic force affixing the external lens in position at the device housing.

13. The method of claim 12 wherein the camera module includes an integral camera lens positioned at a device-housing aperture, and wherein the magnetic coupler is supported about the device-housing aperture.

14. The method of claim 13 wherein said supporting comprises supporting an annular-shaped magnetic coupler about the device-housing aperture.

15. The method of any of claims 12 - 14 further comprising providing an indication of positioning of the external camera lens.
